# EUROPEAN PATENT SPECIFICATION

(11) **EP 2 399 953 B1**
(45) Date of publication and mention of the grant of the patent: **15.03.2017**
(21) Application number: 10743613.1
(22) Date of filing: 21.01.2010
(51) Int. Cl.: C08L 11/02, C08K 5/40

(54) **POLYCHLOROPRENE ELASTOMER COMPOSITION, PROCESS FOR PRODUCING SAME, AND VULCANIZATE AND MOLDED OBJECT**
POLYCHLORPROPEN-ELASTOMER-ZUSAMMENSETZUNG, VERFAHREN ZU DEREN HERSTELLUNG SOWIE VULKANISAT UND FORMOBJEKT DARAUS
COMPOSITION D'ÉLASTOMÈRE DE POLYCHLOROPRÈNE, SON PROCÉDÉ DE PRODUCTION ET VULCANISAT ET OBJET MOULÉ

(30) Priority: 18.02.2009 JP 2009034918
(43) Date of publication of application: 28.12.2011
(73) Proprietor: Denka Company Limited, Tokyo 103-8338 (JP)
(72) Inventor: MIYAUCHI Toshiaki, Itoigawa-shi Niigata 949-0393 (JP); YASHIMA Hiroyuki, Itoigawa-shi Niigata 949-0393 (JP); OTSU Toshiaki, Itoigawa-shi Niigata 949-0393 (JP)
(74) Representative: Smaggasgale, Gillian Helen
(86) International application number: PCT/JP2010/050687
(87) International publication number: WO 2010/095484

(56) References cited:
- JP-A- 62 115 044
- JP-A- 2007 308 550
- US-A- 3 752 785
- US-A- 4 485 216

## Description

### Technical Field

The present invention relates to a polychloroprene elastomer composition, a production method thereof, a vulcanized article and a molded article thereof. More specifically, it relates to a polychloroprene elastomer composition and a vulcanized article for extrusion molding, and a molded article obtained by extrusion molding thereof.

### Background Art

Polychloroprene elastomers have been used widely, for example, as raw materials for industrial rubber components. Mechanical properties such as modulus (modulus of elasticity) and tensile strength, extrusion processability, and scorching resistance are demanded in particular for polychloroprene elastomers for extrusion molding.

Sulfur-modification of polychloroprene sol has been known as a method of improving the modulus and the tensile strength of polychloroprene elastomers (see, for example, Patent Document 1). Methods of mixing a gel polymer to a chloroprene rubber are also known as methods of improving extrusion processability (see, for example, Patent Documents 2 to 4) and methods of adding a thiuram or thiazole compound are known as methods of improving scorching resistance (see, for example, Patent Document 5).

### Citation List

### Patent Literature

[Patent Literature 1] Japanese Unexamined Patent Application Publication No. 59-135214
[Patent Literature 2] Japanese Unexamined Patent Application Publication No. 49-22444
[Patent Literature 3] Japanese Unexamined Patent Application Publication No. 2005-220190
[Patent Literature 4] Japanese Unexamined Patent Application Publication No. 59-066433
[Patent Literature 5] Japanese Examined Patent Application Publication No. 61-46697

### Summary of Invention

### Technical Problems

However, it was difficult to improve both extrusion processability and mechanical properties with the conventional technologies described above and there is reported no polychloroprene elastomer composition that is higher in modulus and tensile strength and superior in extrusion processability.

An object of the present invention is to provide a polychloroprene elastomer composition superior in extrusion processability and mechanical properties, a production method thereof, and the vulcanized and molded articles thereof.

### Solution to Problem

The polychloroprene elastomer composition according to the present invention comprises 100 parts by mass of a polychloroprene elastomer containing a polychloroprene sol and a polychloroprene gel and 0.2 to 5 parts by mass of a thiuram compound, wherein the blending rate by mass of the polychloroprene sol to the polychloroprene gel (sol/gel) is 30/70 to 80/20.

The polychloroprene elastomer composition according to the present invention is improved both in extrusion processability and mechanical properties, because it contains a polychloroprene sol and a polychloroprene gel blended at a particular ratio and additionally, 0.2 to 5 parts by mass of a thiuram compound is added to 100 parts by mass of the polychloroprene elastomer.

The thiuram compound for use in the composition may be at least one compound selected from tetraethylthiuram disulfide, tetrabutylthiuram disulfide, and tetrakis(2-ethylhexyl)thiuram disulfide.

The method of producing a polychloroprene elastomer composition according to the present invention comprises the steps of adding 0.2 to 5 parts by mass of a thiuram compound to 100 parts by mass of a polychloroprene elastomer containing a polychloroprene sol and a polychloroprene gel and blending the polychloroprene sol with the polychloroprene gel at a mass ratio (sol/gel) of 30/70 to 80/20.

In the production method, the thiuram compound may be blended with the polychloroprene gel after emulsion polymerization and before removal of unreacted monomers.

In addition, the vulcanized article according to the present invention is prepared by vulcanizing the polychloroprene elastomer composition described above.

Further, the molded article according to the present invention is prepared by extrusion molding of the polychloroprene elastomer composition or the vulcanized article described above.

Examples of the molded articles include wiper blade materials, hose materials, gasket or cable materials for construction, and the like.

### Advantageous Effects of Invention

The present invention provides a polychloroprene elastomer composition containing a polychloroprene sol and a polychloroprene gel at a particular ratio and additionally a thiuram compound in a particular amount, which is therefore superior in extrusion processability and mechanical properties.

### Description of Embodiments

Hereinafter, embodiments of the invention will be described in detail. It should be understood that the present invention is not limited by the embodiments described below. The polychloroprene elastomer composition in embodiments of the present invention is a blend of 100 parts by mass of a polychloroprene elastomer containing a polychloroprene sol and a polychloroprene gel and 0.2 to 5 parts by mass of a thiuram compound.

### [Polychloroprene sol]

The polychloroprene sol can be prepared by emulsion polymerization of 2-chloro-1,3-butadiene and 2,3-dichloro-1,3-butadiene in the presence of a molecular weight regulator by using a polymerization initiator.

2,3-Dichloro-1,3-butadiene is effective in improving the crystallization resistance of the polychloroprene elastomer composition obtained. However, when contained in a blending amount of less than 1 part by mass, it may not improve the crystallization resistance of the polychloroprene elastomer composition obtained and may lead to deterioration in mechanical strength in an environment of 0°C or lower. Alternatively when contained in a blending amount of more than 10 parts by mass, 2,3-dichloro-1,3-butadiene may lead to deterioration in mechanical properties, such as tensile strength, of the polychloroprene elastomer composition obtained. Thus, the blending amount of 2,3-dichloro-1,3-butadiene is in the range of 1 to 10 parts by mass, preferably in the range of 3 to 7 parts by mass, with respect to 100 parts by mass of 2-chloro-1,3-butadiene.

Alternatively, the molecular weight regulator is a compound that regulates polymerization rate of monomers and examples thereof for use include aliphatic mercaptans, dialkylxanthogen disulfide compounds and the like. Examples of the aliphatic mercaptans include normal dodecylmercaptan, tert-dodecylmercaptan, normal octylmercaptan and the like, and examples of the dialkylxanthogen disulfide compounds include diethylxanthogen disulfide, diisopropylxanthogen disulfide, dibutylxanthogen disulfide and the like.

The blending amount of the molecular weight regulator is in the range of 0.02 to 3 parts by mass with respect to 100 parts by mass of all monomers to be polymerized, preferably in the range of 0.02 to 2 parts by mass for further improvement of extrusion processability and mechanical properties. When contained in a blending amount of less than 0.02 parts by mass, the molecular weight regulator cannot regulate the polymerization rate of monomers, leading to increase of the final conversion rate of the polychloroprene sol obtained. Alternatively when contained in a blending amount of more than 3 parts by mass, it may inhibit polymerization of monomers, giving a polychloroprene sol with a smaller final conversion rate.

Other copolymerizable monomers may be copolymerized with the polychloroprene sol to provide the polychloroprene elastomer composition obtained additionally with various properties. Examples of the other copolymerizable monomers include 1-chloro-1,3-butadiene, sulfur, styrene, acrylonitrile, methacrylonitrile, isoprene, butadiene, acrylic acid and methacrylic acid, and the esters thereof, and the like.

The blending amount of these monomers is preferably less than 20 parts by mass. In the range above, it is possible to provide the polychloroprene elastomer obtained with various properties without deteriorating other properties.

### [Polychloroprene gel]

The polychloroprene gel is prepared by emulsion polymerization of 2-chloro-1,3-butadiene, 2,3-dichloro-1,3-butadiene and a polyfunctional monomer having two or more vinyl groups in the molecule under a particular condition. A molecular weight regulator may be used then as needed.

2,3-Dichloro-1,3-butadiene is effective in improving the crystallization resistance of the polychloroprene elastomer composition obtained. However, when contained in a blending amount of less than 1 part by mass, 2,3-dichloro-1,3-butadiene may not improve the crystallization resistance of the polychloroprene elastomer composition obtained and may lead to deterioration in mechanical strength in an environment of 0°C or lower. Alternatively when the 2,3-dichloro-1,3-butadiene is contained in a blending amount of more than 43 parts by mass, it may lead to deterioration in mechanical properties such as tensile strength of the polychloroprene elastomer composition obtained. Thus, the blending amount of the 2,3-dichloro-1,3-butadiene is in the range of 1 to 43 parts by mass, preferably, 2 to 15 parts by mass, with respect to 100 parts by mass of 2-chloro- 1,3-butadiene.

The polyfunctional monomer having two or more vinyl groups in the molecule is effective in regulating the gelation degree of the polychloroprene gel.

Examples of the polyfunctional monomers having two vinyl groups in the molecule include ethylene glycol dimethacrylate, trimethylene glycol dimethacrylate, tetramethylene glycol dimethacrylate, diethylene glycol dimethacrylate, triethylene glycol dimethacrylate, tetraethylene glycol dimethacrylate and the like.

When used in a blending amount of less than 0.5 parts by mass, these compounds may lead to insufficient gelation of the polychloroprene gel generated and may not lead to improvement of the extrusion processability of the polychloroprene elastomer composition obtained. Alternatively when contained in an amount of more than 25 parts by mass, they may lead to excessive gelation of the polychloroprene gel and deterioration of the mechanical strength of the polychloroprene elastomer composition obtained. Thus when a polyfunctional monomer having two vinyl groups in the molecule is used, its blending amount is in the range of 0.5 to 25 parts by mass, preferably in the range of 3 to 8 parts by mass for further improvement of extrusion processability and mechanical properties, with respect to 100 parts by mass of the total of 2-chloro-1,3-butadiene and 2,3-dichloro-1,3-butadiene.

On the other hand, examples of the polyfunctional monomers having three vinyl groups in the molecule include trimethacrylic ester derivatives such as trimethylolpropane trimethacrylate, trimethylolmethane trimethacrylate, trimethylolethane trimethacrylate and trimethylolhydroxyethane trimethacrylate; trimethylhydroxyethane trimethacrylamide, trimethacryl phosphate, triallyl isocyanate, 1,3,5-trimethacrylate benzene and the like.

If used, such a compound may lead to insufficient gelation of the polychloroprene gel generated and may not lead to improvement in extrusion processability of the polychloroprene elastomer composition obtained, if its blending amount is less than 0.5 part by mass. If blended at a rate of more than 25 parts by mass, it may lead to excessive gelation of the polychloroprene gel and deterioration in mechanical strength of the polychloroprene elastomer composition obtained. Thus, the polyfunctional monomer having three vinyl groups in the molecule is added in an amount in the range of 0.5 to 25 parts by mass, preferably in the range of 1 to 5 parts by mass for further improvement of the extrusion processability and mechanical properties, with respect to 100 parts by mass of the total of 2-chloro-1,3-butadiene and 2,3-dichloro-1,3-butadiene.

These polyfunctional monomers can be used in combination, independently of the number of the vinyl groups. When they are used in combination, the total blending amount is 0.5 to 25 parts by mass with respect to 100 parts by mass of the total of 2-chloro-1,3-butadiene and 2,3-dichloro-1,3-butadiene.

The molecular weight regulator is used supplementarily for regulation of the polymerization rate of monomers, and may be, for example, an aliphatic mercaptan or a dialkylxanthogen disulfide compound. Examples of the aliphatic mercaptans include normal dodecylmercaptan and tert- dodecylmercaptan, normal octylmercaptan and the like, and examples of the dialkylxanthogen disulfide compounds include diethylxanthogen disulfide, diisopropylxanthogen disulfide, dibutylxanthogen disulfide and the like.

The blending amount of these molecular weight regulators is in the range of 0.02 to 2 parts by mass for improvement of extrusion processability and mechanical properties, with respect to 100 parts by mass of all monomers polymerized.

Other copolymerizable monomers may be copolymerized with the polychloroprene gel, to provide the polychloroprene elastomer composition obtained additionally with various properties. Examples of the other copolymerizable monomers include 1-chloro-1,3-butadiene, sulfur, styrene, acrylonitrile, methacrylonitrile, isoprene, butadiene, acrylic acid and methacrylic acid, and the esters thereof, and the like. The blending amount of these monomers is preferably less than 20 parts by mass. It is thus possible to provide the polychloroprene elastomer obtained with various properties without deteriorating other properties.

In addition, the gel fraction of the polychloroprene gel is preferably 50 to 100%. When the gel fraction is adjusted in the range above, the polychloroprene elastomer obtained and the vulcanized article thereof are provided with improved extrusion processability and mechanical properties.

### [Blending rate of polychloroprene elastomer]

In the polychloroprene elastomer composition in the present embodiment, the polychloroprene sol and the polychloroprene gel described above are blended at a mass ratio (sol/gel) of 30/70 to 80/20. If the rate of the polychloroprene sol in the polychloroprene elastomer is more than 80 mass %, extrusion processability of the polychloroprene elastomer composition obtained and the vulcanized article thereof may decline. Alternatively when the rate of the polychloroprene sol in polychloroprene elastomer is less than 30 mass %, the mechanical properties of the molded article may become insufficient.

### [Thiuram compound]

The thiuram compound is a compound added for improvement of the scorching resistance of the polychloroprene elastomer composition obtained, and examples thereof for use include tetraethylthiuram disulfide, tetrabutylthiuram disulfide, tetrakis(2-ethylhexyl)thiuram disulfide and the like.

The blending amount of the thiuram compound is in the range of 0.2 to 5 parts by mass, preferably in the range of 0.2 to 3 parts by mass, with respect to 100 parts by mass of the polychloroprene elastomer containing the polychloroprene sol and the polychloroprene gel. When the blending amount of the thiuram compound is less than 0.2 mass % with respect to 100 parts by mass of the polychloroprene elastomer, it is not possible to obtain the advantageous effects of improving scorching resistance of the polychloroprene elastomer composition Alternatively when used in a blending amount of more than 5 parts by mass with respect to 100 parts by mass of the polychloroprene elastomer, the thiuram compound may become insufficient in mechanical properties such as compression set.

The thiuram compound described above may be added at least one of the polychloroprene sol and the polychloroprene gel in a latex state after termination of polymerization and before removal of unreacted monomers. Alternatively, it may be added to a latex obtained by mixing the polychloroprene sol and the polychloroprene gel. It is particularly preferable to added it to the latex-state polychloroprene gel for improvement of extrusion processability.

Hereinafter, the method of producing the polychloroprene elastomer composition in the present embodiment will be described. In the present embodiment, a polychloroprene sol and a polychloroprene gel are formed first by emulsion polymerization. 2-Chloro-1,3-butadiene and 2,3-dichloro-1,3-butadiene used then are normally stored as cooled, for prevention of polymerization during storage. Thus, these monomers are preferably fed into a polymerization reactor under a temperature condition of -120°C to 0°C, more preferably from economical viewpoint under a temperature condition in the range of -20°C to 0°C.

The polymerization temperatures of the polychloroprene sol and polychloroprene gel are preferably in the range of 20 to 55°C, respectively. The polymerization initiators for use in production of the polychloroprene sol and polychloroprene gel may be known organic peroxides that are commonly used for emulsion polymerization of chloroprene, such as potassium persulfate, ammonium persulfate, sodium persulfate, hydrogen peroxide, and t-butyl hydroperoxide.

In addition, the final conversion rate during polymerization of the polychloroprene sol is preferably 40 to 95 mass %, while the final conversion rate during polymerization of the polychloroprene gel is preferably 80% or more. For regulation of the final conversion rate, the polymerization may be terminated, when the desired conversion rate is obtained, by addition of a polymerization inhibitor terminating the polymerization reaction. The polymerization inhibitor for use then may be any polymerization inhibitor commonly used, such as thiodiphenylamine, 4-tertiary-butylcatechol and 2,2-methylene bis-4-methyl-6-tertiary-butylphenol.

Unreacted monomers are then removed for example by steam stripping and the pH of the latex is adjusted to 5.5 to 7.5 by addition of a known pH adjuster. If a thiuram compound is added to the polychloroprene sol and/or the polychloroprene gel, a certain amount of it is added after termination of polymerization and before removal of unreacted monomers.

Subsequently, the polychloroprene sol and the polychloroprene gel are mixed. They are then mixed in the latex state, as the rate of the polychloroprene gel is kept to 30 to 80 mass % with respect to 100 parts by mass of all polymer solid matter. If a thiuram compound is added to the latex obtained by mixing the polychloroprene sol and the polychloroprene gel, it may be added then in a predetermined amount. Isolation of the polymer from the obtained mixture by a common method, such as freezing solidification, water washing, and hot air drying, gives a polychloroprene elastomer composition.

The polychloroprene elastomer composition in the present embodiment may contain, as needed, a natural rubber, a butyl rubber, BR, NBR, EPDM or the like.

The polychloroprene elastomer composition in the present embodiment may be converted to its vulcanized article by adding a vulcanizing agent or a vulcanizing accelerator used in chloroprene rubbers, blending the mixture at the vulcanizing temperature or lower, molding it into a desired shape, and vulcanizing the molding. The vulcanizing temperature then can be determined as appropriate by the composition of the polychloroprene elastomer composition or the kind of the vulcanizing agent, but normally, it is preferably in the range of 140 to 190°C, more preferably in the range of 150 to 180°C.

Examples of the vulcanizing agents for use include pure metals such as beryllium, magnesium, zinc, calcium, barium, germanium, titanium, tin, zirconium, antimony, vanadium, bismuth, molybdenum, tungsten, tellurium, selenium, iron, nickel, cobalt, and osmium; and the oxides and hydroxides thereof and the like. Among the metal compounds above, calcium oxide, zinc oxide, antimony dioxide, antimony trioxide, and magnesium oxide are particularly preferable because these compounds show higher vulcanizing efficiency. These vulcanizing agents may be used in combination of two or more.

Apparatuses normally used in production of chloroprene rubbers can be used as the apparatuses for kneading, molding, or vulcanizing the polychloroprene elastomer composition in the present embodiment and also as the apparatuses for kneading or molding the vulcanized article of the polychloroprene elastomer composition.

In addition, the polychloroprene elastomer composition may be molded or vulcanized, as it is blended with softeners, fillers, reinforcing agents, plasticizers, processing aids, lubricants, aging inhibitors, stabilizers, silane-coupling agents and others in accordance with the purpose in practical use.

The filler and the reinforcing agent used then may be any ones commonly used in chloroprene rubber application, and examples thereof include carbon black, silica, clay, talc, calcium carbonate and the like. These compounding ingredients are preferably contained in a total amount in the range of 30 to 100 parts by mass with respect to 100 parts by mass of the polychloroprene elastomer composition.

In addition, the plasticizer for use may be any plasticizer commonly used in chloroprene rubbers, and examples thereof include dioctyl phthalate, dioctyl adipate and the like. The blending amount of the plasticizer is preferably in the range up to about 50 parts by mass with respect to 100 parts by mass of the polychloroprene elastomer composition.

The aging inhibitor for use may be any aging inhibitor commonly used in chloroprene rubbers. Specific examples thereof include amine-based aging inhibitors, imidazole-based aging inhibitors, metal carbamate salts, phenol-based aging inhibitors, waxes and the like, and these aging inhibitors can be used alone or in combination. In particular, among the aging inhibitors above, by using an amine-based aging inhibitor, 4,4'-bis(α,α-dimethylbenzyl)diphenylamine or octylated diphenylamine, it is possible to improve heat resistance of the polychloroprene elastomer composition.

The softener for use may be any softener commonly used in chloroprene rubbers. Specifically, petroleum softeners such as lubricating oils, process oils, paraffins, liquid paraffins, vaseline, and petroleum asphalt and also vegetable oil-based softeners such as rapeseed oil, flaxseed oil, castor oil, and palm oil can be used, and these softeners can be used alone or in combination.

The polychloroprene elastomer composition in the present embodiment can be molded by extrusion molding into various molded articles such as wiper blade materials, hose materials, and gasket and cable materials for construction. In such a case, the composition may be vulcanized after extrusion molding, or alternatively, it may be vulcanized before molding and then the vulcanized article be extrusion-molded into various shapes.

As described above in detail, the polychloroprene elastomer composition in the present embodiment, which contains polychloroprene, its major component, consisting of a polychloroprene sol and a polychloroprene gel, wherein the blending rate (sol /gel) by mass is regulated to 30/70 to 80/20, and a thiuram compound added thereto in an amount of 0.2 to 5 parts by mass with respect to 100 parts by mass of the polychloroprene elastomer, is improved both in extrusion processability and mechanical properties.

### Examples

Hereinafter, the advantageous effects of the present invention will be described specifically with reference to Examples and Comparative Examples of the present invention. However, it should be understood that the present invention is not restricted by these Examples. First in the present Examples, polychloroprene sols and polychloroprene gels were prepared by the method shown below:

### <Polymerization for mercaptan-modified polychloroprene sol (sol A)>

In a four-necked flask having a capacity of 5 liter, were placed 130 parts by mass of purified water, 4 parts by mass of a potassium rosinate salt, 0.5 part by mass of ß-formalin naphthalenesulfonate, 96 parts by mass of 2-chloro-1,3-butadiene, 4 parts by mass of 2,3-dichloro-1,3-butadiene, 0.3 part by mass of n-dodecylmercaptan, and other chemicals, and the mixture was polymerized under nitrogen stream by using potassium persulfate as an initiator. When the monomeric conversion rate reached 70%, thiodiphenylamine was added for termination of polymerization. Unreacted monomers were then removed by a common method of steam trapping, to give a latex of mercaptan-modified polychloroprene sol.

### <Polymerization for mercaptan-modified polychloroprene sol (sol B)>

In a four-necked flask having a capacity of 5 liter, were placed 130 parts by mass of purified water, 4 parts by mass of a potassium rosinate salt, 0.5 part by mass of ß-formalin naphthalenesulfonate, 96 parts by mass of 2-chloro-1,3-butadiene, 4 parts by mass of 2,3-dichloro-1,3-butadiene, 0.3 part by mass of n-dodecylmercaptan, and other chemicals, and the mixture was polymerized under nitrogen stream by using potassium persulfate as an initiator. When the monomeric conversion rate reached 70%, thiodiphenylamine was added for termination of polymerization, and 1.5 parts by mass of tetraethylthiuram disulfide was added thereto. Unreacted monomers were then removed by a common method of steam trapping, to give a latex of mercaptan-modified polychloroprene sol containing the thiuram compound.

### <Polymerization for xanthogen-modified polychloroprene sol (sol C)>

In a four-necked flask having a capacity of 5 liter, were placed 130 parts by mass of purified water, 4 parts by mass of a potassium rosinate salt, 0.5 part by mass of ß-formalin naphthalenesulfonate, 96 parts by mass of 2-chloro-1,3-butadiene, 4 parts by mass of 2,3-dichloro-1,3-butadiene, 0.3 part by mass of diethylxanthogen disulfide, and other chemicals, and the mixture was polymerized under nitrogen stream by using potassium persulfate as an initiator. When the monomeric conversion rate reached 70%, thiodiphenylamine was added for termination of polymerization. Unreacted monomers were then removed by a common method of steam trapping, to give a latex of xanthogen-modified polychloroprene sol.

### <Polymerization for xanthogen-modified polychloroprene sol (sol D)>

In a four-necked flask having a capacity of 5 liter, were placed 130 parts by mass of purified water, 4 parts by mass of a potassium rosinate salt, 0.5 part by mass of ß-formalin naphthalenesulfonate, 96 parts by mass of 2-chloro-1,3-butadiene, 4 parts by mass of 2,3-dichloro-1,3-butadiene, 0.3 part by mass of diethylxanthogen disulfide, and other chemicals, and the mixture was polymerized under nitrogen stream by using potassium persulfate as an initiator. When the monomeric conversion rate reached 70%, thiodiphenylamine was added for termination of polymerization and 1.5 parts by mass of tetraethylthiuram disulfide was added thereto. Unreacted monomers were then removed by a common method of steam trapping, to give a latex of xanthogen-modified polychloroprene sol containing the thiuram compound.

### <Polymerization for mercaptan-modified polychloroprene gel (gel a)>

In a four-necked flask having a capacity of 5 liter, were placed 130 parts by mass of purified water, 5 parts by mass of potassium rosinate salt, 0.5 part by mass of ß-formalin naphthalenesulfonate, 95 parts by mass of 2-chloro-1,3-butadiene, 3 parts by mass of 2,3-dichloro-1,3-butadiene, 2 parts by mass of ethylene glycol dimethacrylate, 0.3 part by mass of n-dodecylmercaptan, and other chemicals, and the mixture was polymerized under nitrogen stream by using potassium persulfate as an initiator. When the monomeric conversion rate reached 90%, thiodiphenylamine was added for termination of polymerization. Unreacted monomers were then removed by a common method of steam trapping, to give a latex of mercaptan-modified polychloroprene gel.

### <Polymerization for mercaptan-modified polychloroprene gel (gel b)>

In a four-necked flask having a capacity of 5 liter, were placed 130 parts by mass of purified water, 5 parts by mass of potassium rosinate salt, 0.5 part by mass of ß-formalin naphthalenesulfonate, 95 parts by mass of 2-chloro-1,3-butadiene, 3 parts by mass of 2,3-dichloro-1,3-butadiene, 2 parts by mass of ethylene glycol dimethacrylate, 0.3 part by mass of n-dodecylmercaptan, and other chemicals, and the mixture was polymerized under nitrogen stream by using potassium persulfate as an initiator. When the monomeric conversion rate reached 90%, thiodiphenylamine was added for termination of polymerization and 1.5 parts by mass of tetraethylthiuram disulfide was added thereto. Unreacted monomers were then removed by a common method of steam trapping, to give a latex of mercaptan-modified polychloroprene gel.

### <Polymerization for xanthogen-modified polychloroprene gel (gel c)>

In a four-necked flask having a capacity of 5 liter, were placed 130 parts by mass of purified water, 5 parts by mass of potassium rosinate salt, 0.5 part by mass of ß-formalin naphthalenesulfonate, 95 parts by mass of 2-chloro-1,3-butadiene, 3 parts by mass of 2,3-dichloro-1,3-butadiene, 2 parts by mass of ethylene glycol dimethacrylate, 0.3 part by mass of diethylxanthogen disulfide, and other chemicals, and the mixture was polymerized under nitrogen stream by using potassium persulfate as an initiator. When the monomeric conversion rate reached 90%, thiodiphenylamine was added for termination of polymerization. Unreacted monomers were then removed by a common method of steam trapping, to give a latex of xanthogen-modified polychloroprene gel.

### <Polymerization for xanthogen-modified polychloroprene gel (gel d)>

In a four-necked flask having a capacity of 5 liter, were placed 130 parts by mass of purified water, 5 parts by mass of potassium rosinate salt, 0.5 part by mass of ß-formalin naphthalenesulfonate, 95 parts by mass of 2-chloro-1,3-butadiene, 3 parts by mass of 2,3-dichloro-1,3-butadiene, 2 parts by mass of ethylene glycol dimethacrylate, 0.3 part by mass of diethylxanthogen disulfide, and other chemicals, and the mixture was polymerized under nitrogen stream by using potassium persulfate as an initiator. When the monomeric conversion rate reached 90%, thiodiphenylamine was added for termination of polymerization and 1.5 parts by mass of tetraethylthiuram disulfide was added thereto. Unreacted monomers were then removed by a common method of steam trapping, to give a latex of xanthogen-modified polychloroprene gel.

### <Polymerization for mercaptan-modified polychloroprene gel (gel e)>

In a four-necked flask having a capacity of 5 liter, were placed 130 parts by mass of purified water, 5 parts by mass of potassium rosinate salt, 0.5 part by mass of ß-formalin naphthalenesulfonate, 95 parts by mass of 2-chloro-1,3-butadiene, 3 parts by mass of 2,3-dichloro-1,3-butadiene, 2 parts by mass of ethylene glycol dimethacrylate, 0.3 part by mass of n-dodecylmercaptan, and other chemicals, and the mixture was polymerized under nitrogen stream by using potassium persulfate as an initiator. When the monomeric conversion rate reached 90%, thiodiphenylamine was added for termination of polymerization, and 0.5 part by mass of tetraethylthiuram disulfide was added thereto. Unreacted monomers were then removed by a common method of steam trapping, to give a latex of mercaptan-modified polychloroprene gel.

### <Polymerization for mercaptan-modified polychloroprene gel (gel f)>

In a four-necked flask having a capacity of 5 liter, were placed 130 parts by mass of purified water, 5 parts by mass of potassium rosinate salt, 0.5 part by mass of ß-formalin naphthalenesulfonate, 95 parts by mass of 2-chloro-1,3-butadiene, 3 parts by mass of 2,3-dichloro-1,3-butadiene, 2 parts by mass of ethylene glycol dimethacrylate, 0.3 part by mass of n-dodecylmercaptan, and other chemicals, and the mixture was polymerized under nitrogen stream by using potassium persulfate as an initiator. When the monomeric conversion rate reached 90%, thiodiphenylamine was added for termination of polymerization and 5.0 parts by mass of tetraethylthiuram disulfide was added thereto. Unreacted monomers were then removed by a common method of steam trapping, to give a latex of mercaptan-modified polychloroprene gel.

### <Polymerization for mercaptan-modified polychloroprene gel (gel g)>

In a four-necked flask having a capacity of 5 liter, were placed 130 parts by mass of purified water, 5 parts by mass of potassium rosinate salt, 0.5 part by mass of ß-formalin naphthalenesulfonate, 95 parts by mass of 2-chloro-1,3-butadiene, 3 parts by mass of 2,3-dichloro-1,3-butadiene, 2 parts by mass of ethylene glycol dimethacrylate, 0.3 part by mass of n-dodecylmercaptan, and other chemicals, and the mixture was polymerized under nitrogen stream by using potassium persulfate as an initiator. When the monomeric conversion rate reached 90%, thiodiphenylamine was added for termination of polymerization and 1.5 parts by mass of tetrabuthylthiuram disulfide was added thereto. Unreacted monomers were then removed by a common method of steam trapping, to give a latex of mercaptan-modified polychloroprene gel.

### <Polymerization for mercaptan-modified polychloroprene gel (gel h)>

In a four-necked flask having a capacity of 5 liter, were placed 130 parts by mass of purified water, 5 parts by mass of potassium rosinate salt, 0.5 part by mass of ß-formalin naphthalenesulfonate, 95 parts by mass of 2-chloro-1,3-butadiene, 3 parts by mass of 2,3-dichloro-1,3-butadiene, 2 parts by mass of ethylene glycol dimethacrylate, 0.3 part by mass of n-dodecylmercaptan, and other chemicals, and the mixture was polymerized under nitrogen stream by using potassium persulfate as an initiator. When the monomeric conversion rate reached 90%, thiodiphenylamine was added for termination of polymerization, and 1.5 parts by mass of tetrakis(2-ethylhexyl)thiuram disulfide was added thereto. Unreacted monomers were then removed by a common method of steam trapping, to give a latex of mercaptan-modified polychloroprene gel.

### <Preparation of polychloroprene elastomer composition>

Subsequently, each of the polychloroprene elastomer compositions of Examples 1 to 11 and Comparative Examples 1 to 5 was prepared by mixing the polychloroprene sol latex and the polychloroprene gel latex obtained at the rate shown in the following Table 1 or 2 and then processing the mixture by a normal freezing solidification and drying method.

### <Kneading>

Then, 0.5 part by mass of stearic acid, 1 part by mass of an aging inhibitor (NOCRAC PA, from Ouchi Shinko Chemical Industrial Co., Ltd.), 30 parts by mass of SRF carbon black (#50, Asahi Carbon Co., Ltd.), 30 parts by mass of FEF carbon black (#60, Asahi Carbon Co., Ltd.), 12 parts by mass of a petroleum process oil (Diana Process Oil, Idemitsu Kosan Co., Ltd.), 1.5 parts by mass of a paraffin wax (Paraffin 130°F, from Nippon Seiro Co., Ltd.), 1.5 parts by mass of vaseline, and 4 parts by mass of magnesium oxide were kneaded with 100 parts by mass of each of the polychloroprene elastomer compositions in Examples and Comparative Examples obtained, in a 3 liter kneader (32 rpm, cooling water temperature: 30°C). The agitation direction was reversed and the mixture was kneaded additionally for 1 minute. 5 Parts by mass of zinc oxide and 0.5 part by mass of ethylene thiourea were blended with the compound by using a 8-inch roll, to give a sheet for evaluation having a thickness of 2.3 mm.

The "scorching resistance" and the "extrusion processability" of the composition of each Example or Comparative Example were determined, by using the sheet prepared by the method described above, in accordance with the following methods:

### <Methods of evaluating polychloroprene elastomer composition>

(A) Scorching resistance: The scorching time (MLt5) of the polychloroprene elastomer composition obtained was measured at 125°C in accordance with JIS K6300.
(B) Extrusion processability: The extrusion rate was measured by using a Garvey die according to ASTM D2230-77 Method A in a 60ϕ extruder at an extrusion temperature of 50°C.

### <Preparation of vulcanized samples>

Each of the polychloroprene elastomer compositions obtained in Examples and Comparative Examples was press-vulcanized under a condition of 160°C×30 minutes, to give a vulcanized sheet having a thickness of 2 mm. The vulcanized sheet obtained was molded by using a No. 3 dumbbell into a vulcanized sample. The "100% modulus", "tensile strength", "elongation", "hardness" and "compression set" of each of the vulcanized samples obtained in Examples and Comparative Examples were determined in accordance with the following methods:

### <Methods of evaluating vulcanized samples>

(C) Tensile property test: The 100% modulus, tensile strength, and elongation of the vulcanized sample were measured in accordance with JIS K6251.
(D) Hardness: The hardness of each vulcanized article was measured in accordance with JIS K6253.
(E) Compression set: The compression permanent deformation of each vulcanized article was measured in accordance with JIS K6262.

The results thus obtained are summarized in the following Tables 1 and 2.

**[Table 1]**

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| | | Sol A | 50 | 50 | 50 | 50 | 50 | - | 40 | 70 | - | - | - |
| | | Sol B | - | - | - | - | - | 50 | - | - | - | - | - |
| | | Sol C | - | - | - | - | - | - | - | - | 50 | - | - |
| Polychloroprene elastomer composition (parts by mass) | | Sol D | - | - | - | - | - | - | - | - | - | 50 | 50 |
| | | Gel a | - | - | - | - | | 50 | - | - | - | - | - |
| | | Gel b | 50 | - | - | - | - | - | 60 | 30 | 50 | - | - |
| | | Gel c | - | - | - | - | - | - | - | - | - | - | 50 |
| | | Gel d | - | - | - | - | - | - | - | - | - | - | - |
| | | Gel e | - | 50 | - | - | - | - | - | - | - | 50 | - |
| | | Gel f | - | - | 50 | - | - | - | - | - | - | - | - |
| | | Gel g | - | - | - | 50 | - | - | - | - | - | - | - |
| | | Gel h | - | - | - | - | 50 | - | - | - | - | - | - |
| Scorching resistance (min) | | | 6.1 | 5.9 | 7.0 | 6.8 | 7.3 | 6.3 | 5.8 | 6.6 | 6.3 | 6.1 | 6.2 |
| Extrusion processability | Extrusion rate (cm/min) | | 407 | 404 | 390 | 391 | 386 | 397 | 395 | 423 | 400 | 406 | 400 |
| Physical properties of vulcanized article under ambient atmosphere | 100% Modulus (MPa) | | 6.1 | 6.3 | 6.6 | 5.6 | 5.0 | 5.8 | 6.5 | 5.8 | 6.7 | 7.0 | 6.8 |
| | Tensile strength (MPa) | | 14.6 | 14.4 | 14.5 | 15.4 | 15.7 | 15.5 | 14.2 | 15.4 | 16.8 | 16.7 | 17.3 |
| | Elongation (%) | | 198 | 186 | 177 | 197 | 191 | 212 | 190 | 222 | 206 | 197 | 215 |
| | Hardness (pt) | | 72 | 72 | 72 | 71 | 71 | 71 | 72 | 71 | 72 | 72 | 71 |
| | Compression set [120°C × 72 h] | | 41 | 39 | 45 | 39 | 40 | 43 | 44 | 36 | 43 | 44 | 45 |

**[Table 2]**

| | | | Comparative Example | | | | |
|---|---|---|---|---|---|---|---|
| | | | 1 | 2 | 3 | 4 | 5 |
| Polychloroprene elastomer composition (parts by mass) | | Sol A | 50 | - | 90 | 20 | - |
| | | Sol B | - | - | - | - | 20 |
| | | Sol C | - | 50 | - | - | - |
| | | Sol D | - | - | - | - | - |
| | | Gel a | 50 | - | - | - | 80 |
| | | Gel b | - | - | 10 | 80 | - |
| | | Gel c | - | 50 | - | - | - |
| | | Gel d | - | - | - | - | - |
| Scorching resistance (min) | | | 5.4 | 5.4 | 6.8 | 4.5 | 4.6 |
| Extrusion processability | Extrusion rate (cm/min) | | 404 | 400 | 409 | 356 | 344 |
| Physical properties of vulcanized article under ambient atmosphere | 100% Modulus (MPa) | | 5.9 | 6.8 | 3.6 | 7.5 | 8.0 |
| | Tensile strength (MPa) | | 14.3 | 16.4 | 19.1 | 12.5 | 12.9 |
| | Elongation (%) | | 193 | 195 | 238 | 165 | 171 |
| | Hardness (pt) | | 71 | 72 | 68 | 72 | 72 |
| | Compression set [120°C × 72 h] | | 39 | 42 | 32 | 48 | 50 |

As shown in Tables 1 and 2, the polychloroprene elastomer compositions of Examples 1 to 11, which were prepared within the scope of the present invention, were better in extrusion processability and also in the balance of physical properties including tensile properties and compression set than the polychloroprene elastomer compositions of Comparative Examples 1 to 5, which were prepared by a conventional method.

Polychloroprene elastomer compositions prepared from a known sulfur-modified polychloroprene sol or a known sulfur-modified polychloroprene gel were inferior in heat resistance than the polychloroprene elastomer compositions of Examples 1 to 11 that were prepared within the scope of the present invention, although there is no description thereof in Tables 1 and 2.

## Claims

1. A polychloroprene elastomer composition, comprising 100 parts by mass of a polychloroprene elastomer containing a polychloroprene sol and a polychloroprene gel and 0.2 to 5 parts by mass of a thiuram compound,
the polychloroprene sol being prepared by emulsion polymerization of the mixture of 100 parts by mass of 2-chloro-1,3-butadiene and 1 to 10 parts by mass of 2,3-dichloro-1,3-butadiene in the presence of 0.02 to 2 parts by mass of aliphatic mercaptans or dialkylxanthogen disulfide compounds with respect to 100 parts by mass of all monomers to be polymerized,
the polychloroprene gel being prepared by emulsion polymerization of the mixture of 100 parts by mass of 2-chloro-1,3-butadiene, 1 to 43 parts by mass of 2,3-dichloro-1,3-butadiene, and 0.5 to 25 parts by mass with respect to 100 parts by mass of the total of 2-chloro-1,3-butadiene and 2,3-dichloro-1,3-butadiene of a polyfunctional monomer having 2 or more vinyl groups in the molecule in the presence of 0.02 to 2 parts by mass of aliphatic mercaptans or dialkylxanthogen disulfide compounds with respect to 100 parts by mass of all monomers to be polymerized,
wherein the blending rate of the polychloroprene sol to the polychloroprene gel (sol/gel) is 30/70 to 80/20 by mass.

2. The polychloroprene elastomer composition according to Claim 1, wherein the thiuram compound is at least one compound selected from tetraethylthiuram disulfide, tetrabutylthiuram disulfide, and tetrakis(2-ethylhexyl)thiuram disulfide.

3. A method of producing a polychloroprene elastomer composition, comprising the steps of
obtaining a polychloroprene sol by emulsion polymerization of the mixture of 100 parts by mass of 2-chloro-1,3-butadiene and 1 to 10 parts by mass of 2,3-dichloro-1,3-butadiene in the presence of 0.02 to 2 parts by mass of aliphatic mercaptans or dialkylxanthogen disulfide compounds with respect to 100 parts by mass of all monomers to be polymerized,
obtaining a polychloroprene gel being prepared by emulsion polymerization of the mixture of 100 parts by mass of 2-chloro-1,3-butadiene, 1 to 43 parts by mass of 2,3-dichloro-1,3-butadiene, and 0.5 to 25 parts by mass with respect to 100 parts by mass of the total of 2-chloro-1,3-butadiene and 2,3-dichloro-1,3-butadiene of a polyfunctional monomer having 2 or more vinyl groups in the molecule in the presence of 0.02 to 2 parts by mass of aliphatic mercaptans or dialkylxanthogen disulfide compounds with respect to 100 parts by mass of all monomers to be polymerized,
adding 0.2 to 5 parts by mass of a thiuram compound to 100 parts by mass of a polychloroprene elastomer to at least one of the polychloroprene sol and the polychloroprene gel or to a latex obtained by mixing the polychloroprene sol and the polychloroprene gel, and
blending the polychloroprene sol and the polychloroprene gel at a mass ratio (sol/gel) of 30/70 to 80/20.

4. The method of producing a polychloroprene elastomer composition according to Claim 3, wherein the thiuram compound is added to the polychloroprene gel after emulsion polymerization and before removal of the unreacted monomers.

5. A vulcanised article obtained by vulcanizing the polychloroprene elastomer composition according to Claim 1 or 2.

6. A molded article obtained by extrusion-molding of the polychloroprene elastomer composition according to Claim 1 or 2 or the vulcanized article according to Claim 5.

7. The molded article according to Claim 6, which is a wiper blade material, a hose material, or a gasket or cable material for construction.

8. Use of the polychloroprene elastomer composition according to Claim 1 or 2 in the manufacture of either:
a) a vulcanised article which is obtained by vulcanising the polychloroprene elastomer composition according to Claim 1 or 2, or
b) a molded article which is obtained by extrusion-molding of the polychloroprene elastomer composition according to Claim 1 or 2.

9. The method of producing a polychloroprene elastomer composition according to Claim 3 or 4, further comprising a vulcanisation step to provide the polychloroprene elastomer composition in the form of a vulcanised article.

10. The method of producing a polychloroprene elastomer composition according to Claim 3, 4 or 9, further comprising an extrusion-molding step to provide the polychloroprene elastomer composition in the form of a molded article.

## Patentansprüche

1. Polychloropren-Elastomerzusammensetzung umfassend 100 Masseteile eines Polychloropren-Elastomers enthaltend ein Polychloropren-Sol und ein Polychloropren-Gel und 0,2 bis 5 Masseteile einer Thiuramverbindung,
wobei das Polychloropren-Sol durch Emulsionspolymerisation des Gemisches von 100 Masseteilen von 2-Chlor-1,3-butadien und 1 bis 10 Masseteilen von 2,3-Dichlor-1,3-butadien in der Gegenwart von 0,02 bis 2 Masseteilen an aliphatischen Merkaptanen oder Dialkylxanthogendisulfidverbindungen in Bezug auf 100 Masseteile aller zu polymerisierender Monomere vorbereitet wird,
wobei das Polychloropren-Gel durch Emulsionspolymerisation des Gemisches von 100 Masseteilen von 2-Chlor-1,3-butadien, 1 bis 43 Masseteilen von 2,3-Dichlor-1,3-butadien und 0,5 bis 25 Masseteilen in Bezug auf 100 Masseteile von dem gesamten 2-Chlor-1,3-butadien und 2,3-Dichlor-1,3-butadien
von einem polyfunktionalen Monomer mit 2 oder mehr Vinylgruppen in dem Molekül in der Gegenwart von 0,02 bis 2 Masseteilen an aliphatischen Merkaptanen oder Dialkylxanthogendisulfidverbindungen in Bezug auf 100 Masseteile aller zu polymerisierenden Monomere,
wobei das Mischverhältnis von dem Polychloropren-Sol zu dem Polychloropren-Gel (Sol/Gel) 30/70 bis 80/20 bezogen auf die Masse ist.

2. Polychloropren-Elastomerzusammensetzung nach Anspruch 1, wobei die Thiuramverbindung zumindest eine Verbindung ist ausgewählt aus Tetraethylthiuramdisulfid, Tetrabutylthiuramdisulfid und Tetrakis(2-ethylhexyl)thiuramdisulfid.

3. Verfahren zur Herstellung einer Polychloropren-Elastomerzusammensetzung umfassend die Schritte von:
Erhalten eines Polychloropren-Sols durch Emulsionspolymerisation des Gemisches von 100 Masseteilen von 2-Chlor-1,3-butadien und 1 bis 10 Masseteilen von 2,3-Dichlor-1,3-butadien in der Gegenwart von 0,02 bis 2 Masseteilen an aliphatischen Merkaptanen oder Dialkylxanthogendisulfidverbindungen in Bezug auf 100 Masseteile aller zu polymerisierender Monomere,
Erhalten eines Polychloropren-Gels welches vorbereitet wird durch Emulsionspolymerisation des Gemisches von 100 Masseteilen von 2-Chlor-1,3-butadien, 1 bis 43 Masseteilen von 2,3-Dichlor-1,3-butadien und 0,5 bis 25 Masseteilen in Bezug auf 100 Masseteile von dem gesamten 2-Chlor-1,3-butadien und 2,3-Dichlor-1,3-butadien
von einem polyfunktionalen Monomer mit 2 oder mehr Vinylgruppen in dem Molekül in der Gegenwart von 0,02 bis 2 Masseteilen an aliphatischen Merkaptanen oder Dialkylxanthogendisulfidverbindungen in Bezug auf 100 Masseteile aller zu polymerisierenden Monomere,
Hinzufügen von 0,2 bis 5 Masseteilen einer Thiuramverbindung zu 100 Masseteilen eines Polychloropren-Elastomers zu zumindest einem aus dem Polychloropren-Sol und dem Polychloropren-Gel oder zu einem Latex, welches durch Vermischen des Polychloropren-Sols und des Polychloropren-Gels erhalten wurde, und
Vermischen des Polychloropren-Sols und des Polychloropren-Gels bei einem Massenverhältnis (Sol/Gel) von 30/70 bis 80/20.

4. Verfahren zur Herstellung einer Polychloropren-Elastomerzusammensetzung nach Anspruch 3, wobei die Thiuramverbindung zu dem Polychloropren-Gel nach Emulsionspolymerisation und vor Entfernung der nicht umgesetzten Monomere hinzugefügt wird.

5. Vulkanisierter Artikel erhalten durch Vulkanisation der Polychloropren-Elastomerzusammensetzung nach Anspruch 1 oder 2.

6. Geformter Artikel erhalten durch Extrusionsformung der Polychloropren-Elastomerzusammensetzung nach Anspruch 1 oder 2 oder des vulkanisierten Artikels nach Anspruch 5.

7. Geformter Artikel nach Anspruch 6, welcher ein Wicherblattmaterial, ein Schlauchmaterial oder eine Dichtung oder Kabelmaterial für den Bau ist.

8. Verwendung der Polychloropren-Elastomerzusammensetzung nach Anspruch 1 oder 2 in der Herstellung von entweder:
a) einem vulkanisierten Artikel, welcher durch Vulkanisierung der Polychloropren-Elastomerzusammensetzung nach Anspruch 1 oder 2 erhalten wird, oder
b) einem geformten Artikel, welcher durch Extrusionsformung der Polychloropren-Elastomerzusammensetzung nach Anspruch 1 oder 2 erhalten wird.

9. Verfahren zur Herstellung einer Polychloropren-Elastomerzusammensetzung nach Anspruch 3 oder 4, ferner umfassend einen Vulkanisationsschritt zur Bereitstellung der Polychloropren-Elastomerzusammensetzung in der Form eines vulkanisierten Artikels.

10. Verfahren zur Herstellung einer Polychloropren-Elastomerzusammensetzung nach Anspruch 3, 4 oder 9, ferner umfassend einen Extrusions-Formungsschritt zur Bereitstellung der Polychloropren-Elastomerzusammensetzung in der Form eines geformten Artikels.

## Revendications

1. Composition d'élastomère de polychloroprène, comprenant 100 parties en masse d'un élastomère de polychloroprène contenant un sol de polychloroprène et un gel de polychloroprène et de 0,2 à 5 parties en masse d'un composé de thiurame,
le sol de polychloroprène étant préparé par polymérisation en émulsion du mélange de 100 parties en masse de 2-chloro-1,3-butadiène et de 1 à 10 parties en masse de 2,3-dichloro-1,3-butadiène en présence de 0,02 à 2 parties en masse de mercaptans aliphatiques ou de composés de disulfure de dialkylxanthogène par rapport à 100 parties en masse de tous les monomères à polymériser,
le gel de polychloroprène étant préparé par polymérisation en émulsion du mélange de 100 parties en masse de 2-chloro-1,3-butadiène, de 1 à 43 parties en masse de 2,3-dichloro-1,3-butadiène, et de 0,5 à 25 parties en masse, par rapport à 100 parties en masse du total de 2-chloro-1,3-butadiène et de 2,3-dichloro-1,3-butadiène, d'un monomère polyfonctionnel possédant 2, ou plus, groupements vinyle dans la molécule en présence de 0,02 à 2 parties en masse de mercaptans aliphatiques ou de composés de disulfure de dialkylxanthogène par rapport à 100 parties en masse de tous les monomères à polymériser,
où le taux de mélangeage du sol de polychloroprène au gel de polychloroprène (sol/gel) va de 30/70 à 80/20 en masse.

2. Composition d'élastomère de polychloroprène selon la revendication 1, dans laquelle le composé de thiurame est au moins un composé choisi parmi le disulfure de tétraéthylthiurame, le disulfure de tétrabutylthiurame, et le disulfure de tétrakis(2-éthylhexyl)thiurame.

3. Méthode de production d'une composition d'élastomère de polychloroprène, comprenant les étapes
d'obtention d'un sol de polychloroprène par polymérisation en émulsion du mélange de 100 parties en masse de 2-chloro-1,3-butadiène et de 1 à 10 parties en masse de 2,3-dichloro-1,3-butadiène en présence de 0,02 à 2 parties en masse de mercaptans aliphatiques ou de composés de disulfure de dialkylxanthogène par rapport à 100 parties en masse de tous les monomères à polymériser,
d'obtention d'un gel de polychloroprène étant préparé par polymérisation en émulsion du mélange de 100 parties en masse de 2-chloro-1,3-butadiène, de 1 à 43 parties en masse de 2,3-dichloro-1,3-butadiène, et de 0,5 à 25 parties en masse, par rapport à 100 parties en masse du total de 2-chloro-1,3-butadiène et de 2,3-dichloro-1,3-butadiène, d'un monomère polyfonctionnel possédant 2, ou plus, groupements vinyle dans la molécule en présence de 0,02 à 2 parties en masse de mercaptans aliphatiques ou de composés de disulfure de dialkylxanthogène par rapport à 100 parties en masse de tous les monomères à polymériser,
d'addition de 0,2 à 5 parties en masse d'un composé de thiurame pour 100 parties en masse d'un élastomère de polychloroprène à au moins l'un parmi le sol de polychloroprène et le gel de polychloroprène ou à un latex obtenu par mélange du sol de polychloroprène et du gel de polychloroprène, et
de mélangeage du sol de polychloroprène et du gel de polychloroprène selon un rapport en masse (sol/gel) allant de 30/70 à 80/20.

4. Méthode de production d'une composition d'élastomère de polychloroprène selon la revendication 3, dans laquelle le composé de thiurame est ajouté au gel de polychloropropène après la polymérisation en émulsion et avant l'élimination des monomères non réagis.

5. Article vulcanisé obtenu par vulcanisation de la composition d'élastomère de polychloroprène selon la revendication 1 ou 2.

6. Article moulé obtenu par moulage par extrusion de la composition d'élastomère de polychloroprène selon la revendication 1 ou 2 ou de l'article vulcanisé selon la revendication 5.

7. Article moulé selon la revendication 6, qui est un matériau d'essuie-glace, un matériau de tuyau flexible, ou un matériau de joint d'étanchéité ou de câble pour la construction.

8. Utilisation de la composition d'élastomère de polychloroprène selon la revendication 1 ou 2 pour la fabrication soit :
a) d'un article vulcanisé obtenu par la vulcanisation de la composition d'élastomère de polychloroprène selon la revendication 1 ou 2, soit
b) d'un article moulé obtenu par moulage par extrusion de la composition d'élastomère de polychloroprène selon la revendication 1 ou 2.

9. Méthode de production d'une composition d'élastomère de polychloroprène selon la revendication 3 ou 4, comprenant en outre une étape de vulcanisation afin de fournir la composition d'élastomère de polychloroprène sous forme d'un article vulcanisé.

10. Méthode de production d'une composition d'élastomère de polychloroprène selon la revendication 3, 4 ou 9, comprenant en outre une étape de moulage par extrusion afin de fournir la composition d'élastomère de polychloroprène sous forme d'un article moulé.
